# FASCICULE DE BREVET EUROPEEN

(11) **EP 1 073 537 B1**
(45) Date de publication et mention de la délivrance du brevet: **02.04.2003**
(21) Numéro de dépôt: 00906450.2
(22) Date de dépôt: 22.02.2000
(51) Int. Cl.: B23K 1/00

(54) **PROCEDE DE BRASAGE D'UN ECHANGEUR DE CHALEUR DE GAZ D'ECHAPPEMENT**
VERFAHREN ZUM LÖTEN EINES ABGASWÄRMAUSTAUSCHERS
METHOD FOR SOLDERING AN EXHAUST GAS HEAT EXCHANGER

(30) Priorité: 23.02.1999 FR 9902242
(43) Date de publication de la demande: 07.02.2001
(73) Titulaire: VALEO THERMIQUE MOTEUR, 78321 La Verrière (FR)
(72) Inventeur: GRACIA, Benjamin, E-50009 Zaragoza (ES); LAUDIC, Hélène, F-78230 Le Pecq (FR)
(74) Mandataire: Rolland, Jean-Christophe
(86) Numéro de dépôt international: FR0000436
(87) Numéro de publication internationale: WO00050195

(56) Documents cités:
- US-A- 5 110 035
- US-A- 5 150 520
- US-A- 5 622 220

## Description

L'invention concerne un procédé pour assembler de manière étanche, par brasage, une plaque collectrice délimitant une boîte à fluide d'échangeur de chaleur et une multiplicité de tubes allongés parallèles dont les extrémités traversent des trous respectifs de ladite plaque collectrice pour permettre une communication de fluide entre l'intérieur des tubes et l'intérieur de la boîte à fluide, procédé dans lequel on fait fondre une brasure pour assurer une liaison étanche entre la périphérie de chaque trou et la surface extérieure du tube correspondant (voir, par exemple, US-A-5 622 220).

Un tel procédé est utilisé en particulier pour l'assemblage d'un échangeur de chaleur destiné à l'échange de chaleur entre les gaz d'échappement d'un véhicule, circulant à l'extérieur des tubes, et un fluide de refroidissement circulant à l'intérieur des tubes, échange de chaleur qui permet d'utiliser une partie de l'énergie calorifique des gaz d'échappement pour le chauffage de l'habitacle du véhicule.

Dans ce type d'échangeurs, pour résister au caractère corrosif des gaz d'échappement, les pièces sont en acier inoxydable et la brasure est à base de nickel.

Diverses techniques sont utilisées pour appliquer cette brasure. L'une d'elles consiste à déposer à la seringue des gouttes de brasure à l'état de pâte sur la plaque collectrice, après mise en place des tubes et au voisinage de ceux-ci. D'autres techniques consistent à tremper les extrémités des tubes assemblées en faisceau dans un liquide contenant la brasure, ou à projeter au pistolet la brasure à l'état de poudre sur les extrémités des tubes du faisceau, ou sur la plaque collectrice avant mise en place des tubes.

Toutes ces techniques nécessitent des manipulations complexes et parfois délicates et ne permettent pas une bonne maîtrise de la quantité de brasure appliquée ainsi qu'une bonne étanchéité entre les tubes et la plaque collectrice.

Le but de l'invention est de remédier à ces inconvénients.

L'invention vise notamment un procédé du genre défini en introduction, et prévoit que la brasure est appliquée sur l'une au moins des faces de la plaque collectrice, avant insertion des extrémités des tubes, sous forme d'une feuille adhésive souple préalablement perforée en correspondance des trous de la plaque.

De telles feuilles adhésives de brasure, notamment à base de nickel, sont couramment disponibles dans le commerce, par exemple sous forme de rubans munis de pellicules protectrices, et sont utilisées pour assembler des pièces présentant des surfaces respectives continues qui sont appliquées l'une contre l'autre avec interposition de la feuille de brasure.

Des caractéristiques optionnelles de l'invention, complémentaires ou alternatives, sont énoncées ci-après:
- Le contour des perforations de la feuille de brasure coïncide sensiblement avec celui des trous de la plaque collectrice.
- Les perforations de la feuille de brasure sont plus petites que les trous de la plaque collectrice.
- Les perforations de la feuille de brasure ont sensiblement la même forme et le même centre que les trous de la plaque collectrice.
- Le contour d'une perforation de la feuille de brasure présente des points communs avec celui du trou correspondant de la plaque collectrice, et se situe pour le reste à l'intérieur du contour du trou.
- Le contour de la perforation s'éloigne progressivement de celui du trou à partir d'un point commun.
- Le contour de la perforation s'éloigne brusquement, par un décrochement, de celui du trou à partir d'un point commun.
- Le contour de la perforation, entre deux décrochements, reste à une distance sensiblement constante à l'intérieur de celui du trou.
- À chaque perforation de la feuille de brasure est associé un collet formé par découpe et déformation conjointes de la feuille et s'étendant sensiblement dans la direction longitudinale du tube à partir de celle-ci.
- On part d'une feuille de brasure présentant une face adhésive et munie d'une pellicule protectrice au moins sur ladite face adhésive, et on découpe la feuille pour l'adapter à la forme de la plaque collectrice et pour réaliser les perforations, avant de retirer la pellicule protectrice et d'appliquer la feuille sur la plaque collectrice.
- La feuille est munie d'une seconde pellicule protectrice à l'opposé de ladite face adhésive, qu'on retire après application de la feuille et avant fusion de la brasure.
- On met les tubes en place en les faisant passer à travers les trous de ladite plaque collectrice recouverte par la feuille.
- La brasure est à base de nickel.
- La plaque collectrice et les tubes sont en acier inoxydable.

Les caractéristiques et avantages de l'invention seront exposés plus en détail dans la description ci-après, en se référant aux dessins annexés.

La figure 1 est une vue en coupe axiale d'un échangeur de chaleur selon l'invention pour la récupération de chaleur des gaz d'échappement d'un véhicule automobile.

La figure 2 est une vue en élévation d'une plaque collectrice de l'échangeur de chaleur de la figure 1.

La figure 3 est une vue partielle en coupe transversale d'une feuille de brasure destinée à être appliquée sur la plaque de la figure 2, après perforation et avant enlèvement des pellicules protectrices.

Les figures 4 à 7 montrent différentes formes possibles pour les perforations de la feuille de brasure, et leur disposition par rapport aux trous de la plaque collectrice.

La figure 8 est une vue partielle de la plaque collectrice et de la feuille de brasure, en coupe selon la ligne VIII-VIII de la figure 7.

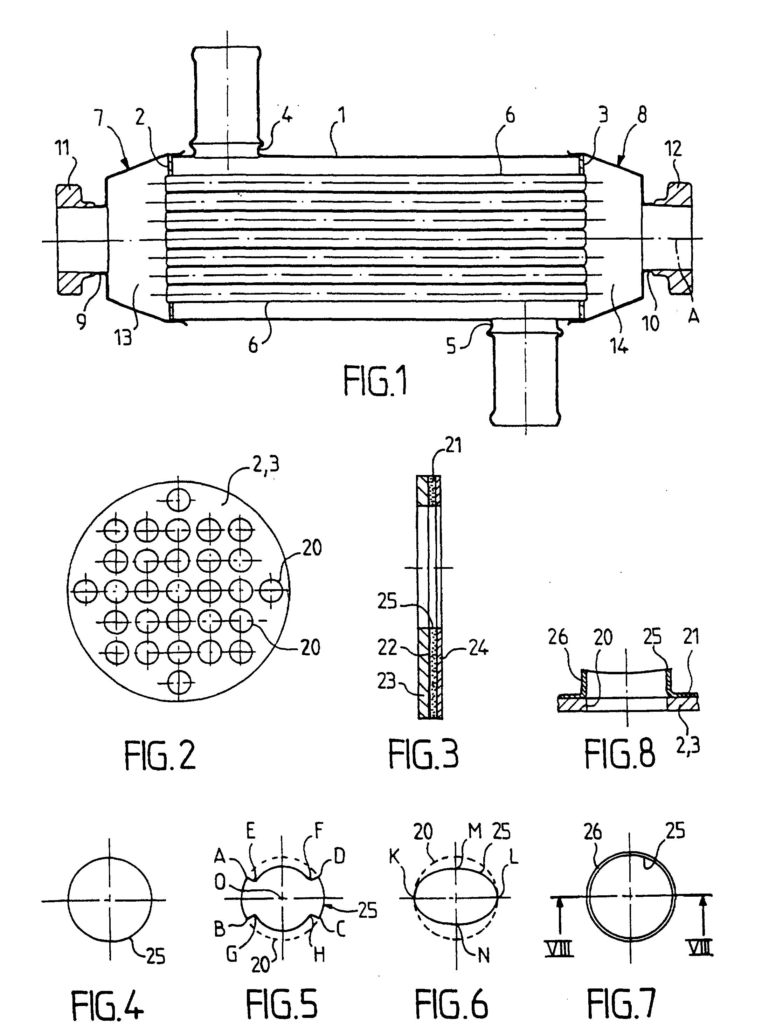

L'échangeur de chaleur représenté sur la figure 1 comprend, de manière connue en soi, un boîtier central de forme cylindrique de révolution composé d'une paroi périphérique cylindrique 1 et de deux parois d'extrémité circulaires 2, 3 formant plaques collectrices. Des tubulures d'entrée et de sortie 4, 5 pour le fluide de refroidissement du moteur du véhicule sont aménagées sur la paroi 1, en des positions diamétralement opposées, l'une au voisinage de la plaque 2 et l'autre au voisinage de la plaque 3. Des trous circulaires répartis sur la surface des plaques 2 et 3 reçoivent les extrémités de tubes 6 allongés parallèlement à l'axe A du boîtier. Deux coupelles annulaires 7, 8, de révolution autour de l'axe A, coiffent respectivement les extrémités du boîtier et se terminent, à l'opposé de celui-ci, par des tubulures axiales 9, 10 qui sont brasées respectivement à des brides 11, 12 destinées à la fixation de l'échangeur de chaleur sur le véhicule. Les parois 1-3, les tubes 6, les coupelles 7, 8 et les brides 11, 12 sont mutuellement assemblés par brasage de manière étanche aux fluides. Les gaz d'échappement pénètrent par la tubulure 9 dans la boîte collectrice 13 délimitée par la plaque 2 et la coupelle 7, cheminent à l'intérieur des tubes 6 pour atteindre la boîte collectrice 14 délimitée par la plaque 3 et la coupelle 8, et sortent par la tubulure 10. Le fluide de refroidissement pénètre par la tubulure 4 à l'intérieur du boîtier 1-3, où il chemine en balayant la surface extérieure des tubes de manière à recueillir la chaleur des gaz qui circulent à l'intérieur ceux-ci, puis sort par la tubulure 5. La circulation de chaque fluide peut également s'effectuer en sens inverse de celui qui vient d'être décrit. Les plaques collectrices 2, 3, les tubes 6, les coupelles 7, 8 et les brides 10, 12, en contact avec les gaz d'échappement, sont en acier inoxydable.

Les plaques collectrices circulaires 2, 3 sont identiques entre elles et les trous circulaires 20 pour le passage des tubes sont régulièrement répartis sur leur surface, par exemple selon un réseau à mailles carrées, comme montré sur la figure 2.

La figure 3 est une vue partielle en coupe d'une pastille stratifiée souple découpée aux dimensions de la plaque 2, 3, comprenant une feuille 21 de brasure à base de nickel, recouverte sur l'une 22 de ses faces d'une couche d'adhésif et d'une pellicule protectrice 23, et sur sa face opposée d'une pellicule protectrice 24. La figure 3 montre l'une des perforations 25 ménagée dans la pastille stratifiée 21-24, en correspondance des trous 20. Les perforation 25 peuvent être réalisées par poinçonnage, en même temps que la découpe du contour de la pastille. Avant d'appliquer la feuille 21 sur la plaque 2, 3, il reste à retirer la pellicule 23 pour exposer l'adhésif. La pellicule 24 est ensuite retirée, avant passage au four de brasage.

Les figures 4 à 6 montrent quatre formes possibles pour des perforations 25 associées à des trous 20 circulaires devant recevoir des tubes à section elle aussi circulaire.

Sur la figure 4, la perforation 25 est circulaire et de même diamètre que le trou 20, son contour venant entièrement en coïncidence avec celui du trou.

Sur la figure 5, le contour de la perforation comprend deux arcs AB et CD, diamétralement opposés entre eux, d'un cercle coïncidant avec le contour du trou 20, et deux arcs EF et GH, diamétralement opposés entre eux, d'un cercle de plus petit diamètre que le précédent et de même centre O, les extrémités des arcs du second cercle étant reliées à celles des arcs du premier cercle par des segments sensiblement radiaux formant échelons AE, BG, CH et DF.

Sur la figure 6, le contour de la perforation 25 a la forme d'une ellipse dont le grand diamètre KL coïncide avec un diamètre du trou 20. Le contour 25 s'éloigne donc progressivement vers l'intérieur de celui du trou 20 depuis chacune des extrémités KL de son grand diamètre jusqu'à chacune des extrémités MN de son petit diamètre.

En variante, comme montré sur les figures 7 et 8, à chaque trou 20 de la plaque 2, 3 peut être associé un collet 26 formé, en même temps que la perforation 25, par découpe et déformation de la feuille 21. Le collet 26 s'étend sensiblement perpendiculairement au plan de la plaque collectrice 2, 3, c'est-à-dire parallèlement à l'axe du tube.

Les formes de perforations illustrées sur les figures 5 et 6, qui ne sont que des exemples des multiples formes possibles, éventuellement adaptées à des trous et à des tubes non circulaires, permettent d'optimiser le contact entre la brasure et les tubes tout en évitant de déchirer la feuille de brasure lors de l'introduction des tubes. Le collet des figures 7 et 8 a la même fonction.

Dans une variante non illustrée, le contour de la perforation est situé entièrement à l'intérieur du contour du trou, la distance entre ceux-ci pouvant être sensiblement uniforme, par exemple dans le cas d'une perforation et d'un trou circulaires et concentriques, ou au contraire variable.

## Revendications

1. Procédé pour assembler de manière étanche, par brasage, une plaque collectrice (2, 3) délimitant une boîte à fluide (13, 14) d'échangeur de chaleur et une multiplicité de tubes allongés parallèles (6) dont les extrémités traversent des trous respectifs (20) de ladite plaque collectrice (2, 3) pour permettre une communication de fluide entre l'intérieur des tubes (6) et l'intérieur de la boîte à fluide (13, 14), procédé dans lequel on fait fondre une brasure pour assurer une liaison étanche entre la périphérie de chaque trou (20) et la surface extérieure au tube (6) correspondant, **caractérisé en ce que** la brasure est appliquée sur l'une au moins des faces de la plaque collectrice (2, 3), avant insertion des extrémités des tubes (6), sous forme d'une feuille adhésive souple (21) préalablement perforée (25) en correspondance des trous (20) de la plaque (2, 3).

2. Procédé selon la revendication 1, **caractérisé en ce que** le contour des perforations de la feuille de brasure (21) coïncide sensiblement avec celui des trous (20) de la plaque collectrice (2, 3).

3. Procédé selon la revendication 1, **caractérisé en ce que** les perforations (25) de la feuille de brasure (21) sont plus petites que les trous (20) de la plaque collectrice (2,3).

4. Procédé selon la revendication 3, **caractérisé en ce que** les perforations (25) de la feuille de brasure (21) ont sensiblement la même forme et le même centre que les trous (20) de la plaque collectrice (2, 3).

5. Procédé selon la revendication 3, **caractérisé en ce que** le contour d'une perforation (25) de la feuille de brasure (21) présente des points communs (AB, CD) avec celui du trou (20) correspondant de la plaque collectrice (2, 3), et se situe pour le reste à l'intérieur du contour du trou (20).

6. Procédé selon la revendication 5, **caractérisé en ce que** le contour de la perforation (25) s'éloigne progressivement de celui du trou (20) à partir d'un point commun (K, L).

7. Procédé selon la revendication 5, **caractérisé en ce que** le contour de la perforation (25) s'éloigne brusquement, par un décrochement (AE, BG, CH, DF), de celui du trou (20) à partir d'un point commun (A, B, C, D).

8. Procédé selon la revendication 7, **caractérisé en ce que** le contour de la perforation (25), entre deux décrochements (AE, DF), reste à une distance sensiblement constante à l'intérieur de celui du trou (20).

9. Procédé selon l'une des revendications précédentes, **caractérisé en ce qu'**à chaque perforation (25) de la feuille de brasure est associé un collet (26) formé par découpe et déformation conjointes de la feuille (21) et s'étendant sensiblement dans la direction longitudinale du tube (6) à partir de celle-ci.

10. Procédé selon l'une des revendications précédentes, **caractérisé en ce qu'**on part d'une feuille de brasure (21) présentant une face adhésive (22) et munie d'une pellicule protectrice (23) au moins sur ladite face adhésive (22), et qu'on découpe la feuille (29) pour l'adapter à la forme de la plaque collectrice (2, 3) et pour realiser les perforations (25), avant de retirer la pellicule protectrice (23) et d'appliquer la feuille (21) sur la plaque collectrice (2, 3).

11. Procédé selon la revendication 10, **caractérisé en ce que** la feuille (21) est munie d'une seconde pellicule protectrice (24) à l'opposé de ladite face adhésive (22), qu'on retire après application de la feuille (21) et avant fusion de la brasure.

12. Procédé selon l'une des revendications précédentes, **caractérisé en ce qu'**on met les tubes (6) en place en les faisant passer à travers les trous (20) de ladite plaque collectrice (2, 3) recouverte par la feuille (21).

13. Procédé selon l'une des revendications précédentes, **caractérisé en ce que** la brasure est à base de nickel.

14. Procédé selon l'une des revendications précédentes, **caractérisé en ce que** la plaque collectrice (2, 3) et les tubes (6) sont en acier inoxydable.

15. Procédé selon l'une des revendications précédentes pour l'assemblage d'un échangeur de chaleur destiné à l'échange de chaleur entre les gaz d'échappement d'un véhicule, circulant à l'intérieur des tubes (6), et un fluide de refroidissement circulant à l'extérieur des tubes (6).

## Patentansprüche

1. Verfahren zum dichten Zusammenbau durch Löten von einer Auffangplatte (2, 3), die einen Fluidbehälter (13, 14) eines Wärmetauschers begrenzt, und einer Vielzahl von länglichen, parallel liegenden Rohren (6), deren Enden jeweilige Löcher (20) der Auffangplatte (2, 3) durchqueren, um eine Fluidverbindung zwischen dem Inneren der Rohre (6) und dem Inneren des Fluidbehälters (13, 14) zu ermöglichen, bei dem man ein Lot zum Schmelzen bringt, um eine dichte Verbindung zwischen dem Umfang jedes Lochs (20) und der Außenfläche des entsprechenden Rohrs (6) zu gewährleisten, **dadurch gekennzeichnet, daß** das Lot vor dem Einführen der Enden der Rohre (6) auf mindestens eine der Flächen der Auffangplatte (2, 3) in Form einer geschmeidigen haftenden Folie (21) aufgebracht wird, die vorher entsprechend den Löchern (20) der Platte (2, 3) gelocht wurde (25).

2. Verfahren nach Anspruch 1, **dadurch gekennzeichnet, daß** der Umriß der Lochungen der Lötfolie (21) im wesentlichen mit demjenigen der Löcher (20) der Auffangplatte (2, 3) zusammenfällt.

3. Verfahren nach Anspruch 1, **dadurch gekennzeichnet, daß** die Lochungen (25) der Lötfolie (21) kleiner sind als die Löcher (20) der Auffangplatte (2, 3).

4. Verfahren nach Anspruch 3, **dadurch gekennzeichnet, daß** die Lochungen (25) der Lötfolie (21) im wesentlichen die gleiche Form und die gleiche Mitte haben wie die Löcher (20) der Auffangplatte (2, 3).

5. Verfahren nach Anspruch 3, **dadurch gekennzeichnet, daß** der Umriß einer Lochung (25) der Lötfolie (21) gemeinsame Punkte (AB, CD) mit demjenigen des entsprechenden Lochs (20) der Auffangplatte (2, 3) aufweist und sich ansonsten innerhalb des Umfangs des Lochs (20) befindet.

6. Verfahren nach Anspruch 5, **dadurch gekennzeichnet, daß** der Umriß der Lochung (25) sich ausgehend von einem gemeinsamen Punkt (K, L) fortschreitend von demjenigen des Lochs (20) entfernt.

7. Verfahren nach Anspruch 5, **dadurch gekennzeichnet, daß** der Umriß der Lochung (25) sich ausgehend von einem gemeinsamen Punkt (A, B, C, D) durch einen Absatz (AE, BG, CH, DF) abrupt vom Umriß des Lochs (20) entfernt.

8. Verfahren nach Anspruch 7, **dadurch gekennzeichnet, daß** der Umriß der Lochung (25) zwischen zwei Absätzen (AE, DF) in einem im wesentlichen konstanten Abstand innerhalb desjenigen des Lochs (20) bleibt.

9. Verfahren nach einem der vorhergehenden Ansprüche,
**dadurch gekennzeichnet, daß** jeder Lochung (25) der Lötfolie ein Bundring (26) zugeordnet ist, der durch gleichzeitiges Ausschneiden und Verformen der Folie (21) hergestellt wird und sich ausgehend von der Folie im wesentlichen in Längsrichtung des Rohrs (6) erstreckt.

10. Verfahren nach einem der vorhergehenden Ansprüche,
**dadurch gekennzeichnet, daß** man von einer Lötfolie (21) ausgeht, die eine Haftseite (22) aufweist und zumindest auf der Haftseite (22) mit einer Schutzfolie (23) versehen ist, und daß man die Folie (21) auschneidet, um sie an die Form der Auffangplatte (2, 3) anzupassen und um die Lochungen (25) herzustellen, ehe die Schutzfolie (23) abgezogen und die Folie (21) auf die Auffangplatte (2, 3) aufgelegt wird.

11. Verfahren nach Anspruch 10, **dadurch gekennzeichnet, daß** die Folie (21) der Haftseite (22) gegenüberliegend mit einer zweiten Schutzfolie (24) versehen ist, die nach dem Auflegen der Folie (21) und vor dem Schmelzen des Lots abgezogen wird.

12. Verfahren nach einem der vorhergehenden Ansprüche, **dadurch gekennzeichnet, daß** man die Rohre (6) einsetze, indem man sie durch die Löcher (20) der von der Folie (21) bedeckten Auffangplatte (2, 3) scheibt.

13. Verfahren nach einem der vorhergehenden Ansprüche, **dadurch gekennzeichnet, daß** das Lot auf der Basis von Nickel ist.

14. Verfahren nach einem der vorhergehenden Ansprüche, **dadurch gekennzeichnet, daß** die Auffangplatte (2, 3) und die Rohre (6) aus rostfreiem Stahl sind.

15. Verfahren nach einem der vorhergehenden Ansprüche für den Zusammenbau eines Wärmetauschers, der für den Wärmeaustausch zwischen den Auspuffgasen eines Fahrzeugs, die innerhalb der Rohre (6) strömen, und einem außerhalb der Rohre (6) strömenden Kühlfluid bestimmt ist.

## Claims

1. Method for assembling in a leaktight manner, by brazing, a header plate (2, 3) defining a heat-exchanger fluid box (13, 14) and a multiplicity of parallel elongate tubes (6), the ends of which pass through respective holes (20) in the said header plate (2, 3) in order to allow fluid communication between the inside of the tubes (6) and the inside of the fluid box (13, 14), in which method a braze is melted in order to ensure a leaktight connection between the periphery of each hole (20) and the outer surface of the corresponding tube (6), **characterized in that** the braze is applied to at least one of the faces of the header plate (2, 3), before the ends of the tubes (6) are inserted, in the form of a flexible adhesive sheet (21) in which perforations (25) have been made beforehand, these being in registration with the holes (20) in the plate (2, 3).

2. Method according to Claim 1, **characterized in that** the outline of the perforations in the braze sheet (21) coincides approximately with the outline of the holes (20) in the header plate (2, 3).

3. Method according to Claim 1, **characterized in that** the perforations (25) in the braze sheet (21) are smaller than the holes (20) in the header plate (2, 3).

4. Method according to Claim 3, **characterized in that** the perforations (25) in the braze sheet (21) have approximately the same shape and the same centre as the holes (20) in the header plate (2, 3).

5. Method according to Claim 3, **characterized in that** the outline of a perforation (25) in the braze plate (21) has some points (AB, CD) common with the outline of the corresponding hole (20) in the header plate (2, 3) and, as regards the rest, lies inside the outline of the hole (20).

6. Method according to Claim 5, **characterized in that** the outline of the perforation (25) moves progressively away from the outline of the hole (20) starting from a common point (K, L).

7. Method according to Claim 5, **characterized in that** the outline of the perforation (25) moves suddenly away, via a ledge (AE, BG, CH, DF), from the outline of the hole (20) starting from a common point (A, B, C, D) .

8. Method according to Claim 7, **characterized in that** the outline of the perforation (25), between two ledges (AE, DF), remains at an approximately constant distance inside the outline of the hole (20).

9. Method according to one of the preceding claims, **characterized in that** associated with each perforation (25) in the braze sheet is a collar (26) which is formed by jointly cutting and deforming the sheet (21) and extends approximately along the longitudinal direction of the tube (6) starting from the said perforation.

10. Method according to one of the preceding claims, **characterized in that** it starts with a braze sheet (21) having an adhesive face (22) and being provided with a protective film (23), at least on the said adhesive face (22), and **in that** the sheet (21) is cut in order to match it with the shape of the header plate (2, 3) and to produce the perforations (25), before the protective film (23) is removed and before the sheet (21) is applied to the header plate (2, 3).

11. Method according to Claim 10, **characterized in that** the sheet (21) is provided with a second protective film (24) on the opposite side from the said adhesive face (22), which second film is removed after the sheet (21) has been applied and before the braze has been melted.

12. Method according to one of the preceding claims, **characterized in that** the tubes (6) are put into place by passing them through the holes (20) in the said header plate (2, 3) covered with the sheet (21).

13. Method according to one of the preceding claims, **characterized in that** the braze is based on nickel.

14. Method according to one of the preceding claims, **characterized in that** the header plate (2, 3) and the tubes (6) are made of stainless steel.

15. Method according to one of the preceding claims for assembling a heat exchanger intended for heat exchange between the exhaust gases of a vehicle, which flow inside the tubes (6), and a cooling fluid which flows outside the tubes (6).
